(19) Europäisches Patentamt / European Patent Office / Office européen des brevets

(11) **EP 1 564 906 B1**

(12) **EUROPEAN PATENT SPECIFICATION**

(45) Date of publication and mention
of the grant of the patent:
**25.05.2016 Bulletin 2016/21**

(51) Int Cl.:
*H04B 7/04* *(2006.01)*     *H04B 7/06* *(2006.01)*

(21) Application number: **05003423.0**

(22) Date of filing: **17.02.2005**

(54) **Apparatus and method for transmitting and receiving data in a multiuser mimo system**

Datensende-/Empfangsanordnung und -verfahren in einem MIMO-System für Mehrbenutzer

Dispositif et procédé d'émission et de réception de données dans un système MIMO multi-utilisateurs

(84) Designated Contracting States:
**DE FI FR GB IT SE**

(30) Priority: **17.02.2004 US 545422 P**
**05.01.2005 KR 2005000818**

(43) Date of publication of application:
**17.08.2005 Bulletin 2005/33**

(73) Proprietors:
• **Samsung Electronics Co., Ltd.**
**Suwon-si, Gyeonggi-do, 443-742 (KR)**
• **Seoul National University Industry Foundation**
**Seoul (KR)**

(72) Inventors:
• **Lee, Kwang-Bok,**
**Seoul National Univ.**
**Gwanak-gu,**
**Seoul (KR)**

• **Kim, Ho-Jin,**
**Samsung Electronics Co., Ltd.**
**Suwon-si,**
**Gyeonggi-do (KR)**
• **Kim, Sung-Jin,**
**Samsung Electronics Co., Ltd.**
**Suwon-si,**
**Gyeonggi-do (KR)**

(74) Representative: **Grünecker Patent- und**
**Rechtsanwälte**
**PartG mbB**
**Leopoldstraße 4**
**80802 München (DE)**

(56) References cited:
WO-A1-02/093784     WO-A1-03/041300
US-A1- 2003 128 658

**Description**

The present invention relates generally to an apparatus and method for transmitting and receiving data in a multiuser Multiple-Input Multiple-Output (MIMO) system, and in particular, to an apparatus and method for transmitting and receiving data in a multiuser MIMO system in which a base station adaptively selects an antenna scheduling scheme.

The existing wireless mobile communication systems provide voice-oriented services and mostly depend on channel coding to overcome any inferiority of channels. However, due to the increasing demands for a high-quality multimedia service in which users can communicate with anyone regardless of time and place, the existing services are evolving into data-oriented services. Accordingly, there is a high demand for next generation wireless transmission technology for transmitting the larger amount of data at a lower error rate. In particular, it is very important to transmit data at a high rate in a link in which the amount of required data is large.

For the next generation wireless communication, various antenna systems have been proposed. For example, a MIMO system, i.e., a typical antenna system, increases spectrum efficiency through all of transmission antennas without excessive use of a frequency bandwidth. Generally, MIMO is classified into Space-Time Coding (STC), Diversity, Beam Forming (BF), and Spatial Multiplexing (SM) according to the transmission structure and scheme of a transmitter, all of which provide high data rate and reliability.

When various antenna systems are used in a transmission side or a reception side, a scheduling scheme serves as the most important factor in determining system capacity in a multiuser MIMO environment in which different transmission antennas can be simultaneously allocated for data transmission of specific users. As cellular networks tend to use the increasing number of transmission/reception antennas and service the increasing number of users, a scheduling algorithm plays an important role in complicated system scenarios.

A transmission antenna scheduling scheme for users includes various resource (i.e., transmission antennas) allocation schemes. For example, all of transmission antennas are allocated to one user, or the transmission antennas are allocated to different users according to link conditions between the transmission antennas and reception antennas.

The reception side is implemented with linear Zero-Forcing (ZF), Minimum Mean-Squared Error (MMSE), Successive Interference Cancellation (SIC), Ordered SIC, Sphere Decoding, and Maximum Likelihood, and an increase in performance of those schemes undesirably increases complexity of the implementation.

Therefore, in the wireless communication system, the best system capacity is determined according to the type of the MIMO system, the type of the scheduling scheme, and the implementation method of the reception side. Accordingly, the implementation can be achieved in different manners according to purposes of the system.

WO 02/093784 A1 refers to Method and Apparatus for Processing Data in a Multiple-Input Multiple-Output, MIMO, Communication System Utilizing Channel State Information. A successive cancellation receiver processing technique is used to process received signals and performs a number of iterations to provide decoded data streams. For each iteration, input signals for the iteration are processed to provide one or more symbol streams. One of the symbol streams is selected and processed to provide a decoded data stream. An interference due to the decoded data stream is approximately removed from the input signals provided to the next iteration. The channel characteristics are estimated and reported back to the transmitter system and used to adjust the processing of the data prior to transmission.

WO 03/041300 A1 refers to a Multiple-Access Multiple-Input Multiple-Output, MIMO, Communication System. For transmitting data in the Multiple-Access Multiple-Input Multiple-Output, MIMO, Communication System, one or more terminals are selected for data transmission. Then, Channel State Information, CSI, is received that indicates general conditions for the one or more selected terminals. For providing a plurality of modulated signals, data is processed for the one or more selected terminals based on the received CSI. The plurality of modulated signals is transmitted via a plurality of transmit antennas to the one or more selected terminals. Scheduling schemes are designed to optimize transmissions e.g. maximize throughput for single or multiple terminals in a manner to meet various constraints and requirements.

US 2003/0128658 A1 relates to Resource Allocation for MIMO-OFDM Communication Systems. A scheduler is provided for forming one or more sets of terminals for possible (downlink or uplink) data transmission for each of a number of frequency bands. One or more sub-hypotheses may further be formed for each hypothesis, with each sub-hypothesis corresponding to specific assignments of transmit antennas to the terminal(s) in the hypothesis (for the downlink) or a specific order for processing the uplink data transmissions from the terminal (s) (for the uplink). The performance of each sub-hypothesis is then evaluated. One sub-hypothesis is then selected for each frequency band based on the evaluated performance, and the one or more terminals in each selected sub-hypothesis are then scheduled for data transmission on the corresponding frequency band.

It is the object of the present invention to adaptively implement an antenna scheduling scheme according to a structure of a reception side and a number of users in a multiuser MIMO system.

This object is solved by the subject matter of the independent claims.

Preferred embodiments are defined in the dependent claims.

According to an aspect of the present invention, there is adaptively implemented an antenna scheduling scheme according to a number of users for a reception side having both linear and nonlinear characteristics in a multiuser MIMO system.

According to one aspect of the present invention, there is provided a method for transmitting and receiving data in a multiuser Multiple-Input Multiple-Output (MIMO) system including a base station connected to a plurality of user equipments. In the method, each of the user equipments separately calculates channel capacity information using a linear reception scheme and a nonlinear reception scheme, and feeds back the calculated channel capacity information to the base station. The base station separately calculates system capacities using at least two different antenna scheduling schemes based on the channel capacity information fed back from the user equipments, and allocates antennas to the user equipments using a selected antenna scheduling scheme having higher system capacity out of the two antenna scheduling schemes.

According to another aspect of the present invention, there is provided a method for transmitting and receiving data in a multiuser Multiple-Input Multiple-Output (MIMO) system in which a base station allocates antennas based on channel state information received from terminals located within its coverage. The method includes the steps of calculating an entire system capacity using at least two reception schemes based on channel state information received from all of the terminals; selecting a reception scheme having a higher entire system capacity among the reception schemes; allocating antennas using a transmission antenna allocation scheme corresponding to the selected reception scheme.

The above object and other aspects, features, and advantages of the present invention will become more apparent from the following detailed description when taken in conjunction with the accompanying drawings in which:

FIG. 1 is a block diagram illustrating an apparatus for transmitting and receiving data in a multiuser MIMO system according to an embodiment of the present invention;

FIG. 2 is a signaling diagram illustrating a method for transmitting and receiving data in a multiuser MIMO system according to an embodiment of the present invention; and

FIG. 3 is a graph illustrating a relationship between system capacities and antenna scheduling schemes.

Preferred embodiments of the present invention will now be described in detail herein below with reference to the annexed drawings. In the following description, a detailed description of known functions and configurations incorporated herein has been omitted for conciseness.

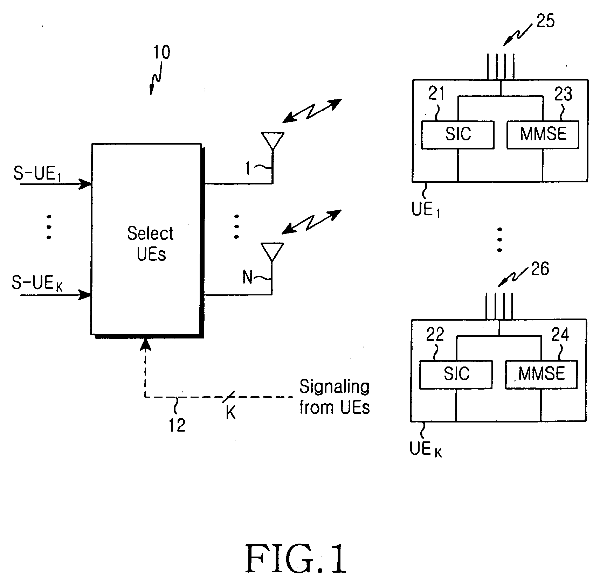

FIG. 1 is a block diagram illustrating an apparatus for transmitting and receiving data in a multiuser MIMO system according to an embodiment of the present invention. As illustrated in FIG. 1, in the multiuser MIMO system, each cell includes a base station 10 and a plurality of user equipments (or terminals) $UE_1$ to $UE_k$.

The base station 10, which includes a plurality of antennas ANT#1 to ANT#N, transmits signals $S-UE_1$ to $S-UE_k$ to their associated user equipments $UE_1$ to $UE_k$. The present invention can use Max Link Technique (MLT) and Independent Stream Technique (IST) as a base station antenna scheduling scheme for multiple user equipments. More specifically, MLT is a scheme for allocating all of transmission antennas to a single user equipment, and IST is a scheme for allocating transmission antennas to different user equipments, wherein each user equipment can be allocated 0, 1, or more than one transmission antennas.

The base station 10 receives feedback information 12 from the respective user equipments $UE_1$ to $UE_k$ for scheduling on the transmission antennas ANT#1 to ANT#N. The received feedback information 12 is information on channel capacities calculated in the respective user equipments $UE_1$ to $UE_k$, and the base station 10 selects an antenna scheduling scheme capable of implementing the best system capacity, using the feedback information 12 and the number of the user equipments $UE_1$ to $UE_k$ currently connected to the base station 10: That is, depending on the number of the user equipments $UE_1$ to $UE_k$ currently connected to the base station 10, the base station 10 determines which of an operation of allocating the transmission antennas ANT#1 to ANT#N to the user equipments $UE_1$ to $UE_k$ with the MLT scheme and an operation of allocating the transmission antennas ANT#1 to ANT#N to the user equipments $UE_1$ to $UE_k$ with the IST scheme is efficient in implementing the best system capacity, and schedules the transmission antennas ANT#1 to ANT#N with the scheme selected for maximizing the system capacity.

The user equipments $UE_1$ to $UE_k$ each include a plurality of antennas 25 and 26, and use both SICs 21 and 22 having a nonlinear characteristic and MMSEs 23 and 24 having a linear characteristic. Therefore, upon receiving signals from the base station 10, the user equipment $UE_1$ to $UE_k$ each separately calculate channel capacities for the SIC schemes 21 and 22 and the MMSE schemes 23 and 24, and feed back the corresponding information to the base station 10. If the base station 10 allocates the transmission antennas ANT#1 to ANT#N with the MLT scheme, the user equipments $UE_1$ to $UE_k$ each receive data with the SIC schemes 21 and 22. If the base station 10 allocates the transmission antennas ANT#1 to ANT#N with the IST scheme, the user equipments $UE_1$ to $UE_k$ each receive data with the MMSE schemes 23 and 24.

Accordingly, a scheduling scheme for the transmission antennas ANT#1 to ANT#N is selected according to the feedback information 12 from the user equipments $UE_1$ to $UE_k$. However, the number of user equipments $UE_1$ to $UE_k$ connected to the base station 10 is subject to change because of movement of the user equipments $UE_1$ to $UE_k$.

Therefore, the base station 10 continuously receives the feedback information 12 from the user equipments $UE_1$ to $UE_k$ using a control signal (for example, a pilot signal) that enables the user equipments $UE_1$ to $UE_k$ to continuously calculate their channel capacity information and feed back the calculated channel capacity information to the base station 10. Further, the base station monitors system capacity in real time based on the received feedback information 12, and adaptively selects an antenna scheduling scheme according to the monitoring result. For example, a user equipment, which is currently connected to the antennas of the base station 10 with the MLT scheme and performs communication using an SIC reception scheme, can later be connected to the antennas of the base station 10 with the IST scheme and perform communication using an MMSE reception scheme due to a change in the number of the user equipments connected to the base station 10.

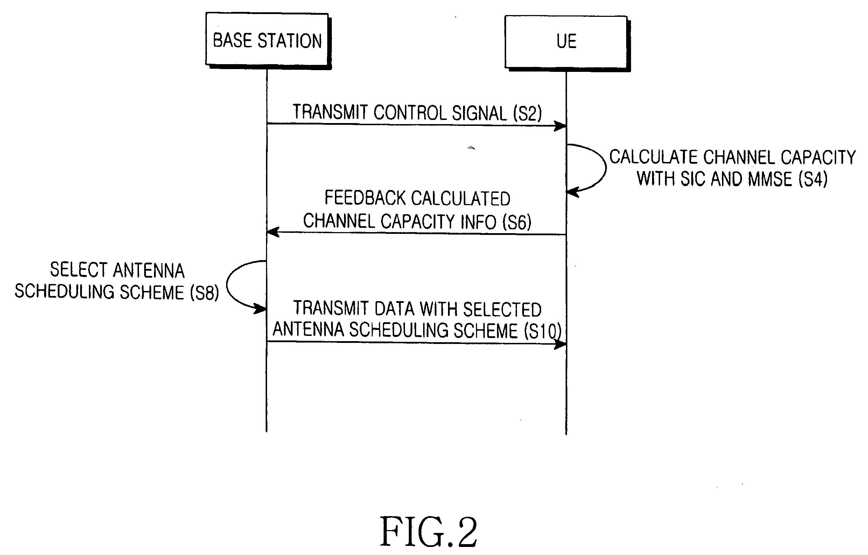

FIG 2 is a signaling diagram illustrating a method for transmitting and receiving data in a multiuser MIMO system according to an embodiment of the present invention. Referring to FIG. 2, in order to determine an antenna scheduling scheme for data transmission, a base station transmits to user equipments a control signal that enables the user equipments to continuously calculate their channel capacity information and feed back the calculated channel capacity information to the base station, in step S2.

In step S4, each user equipment receives the control signal using both the SIC scheme and the MMSE scheme, and calculates channel capacity according to the control signal. Herein, a signal-to-noise ratio (SNR) of a channel established from an $m^{th}$ transmission antenna to a $k^{th}$ user equipment is denoted by $\gamma_{k,m}$ and channel capacity calculated using this SNR value is denoted by $c_f(\gamma_{k,m}(t))$.

In step S6, the user equipment feeds back the channel capacity information $c_f(\gamma_{k,m}(t))$ calculated with the SIC reception scheme and the MMSE reception scheme to the base station.

In step S8, the base station determines whether it will schedule antennas using the MLT scheme or the IST scheme. Accordingly, the base station selects a scheme suitable to maximize system capacity, using the channel capacity information fed back from the user equipment.

When scheduling antennas using the MLT scheme, the base station searches for a $k^{th}$ user equipment where the sum of capacities for all of m transmission antennas is maximized. When antennas are scheduled using the MLT scheme, system capacity can be expressed as Equation (1).

$$C_{\mathrm{M}}(t) = \max_{k} \sum_{m} c_f(\gamma_{k,m}(t)) \qquad \ldots \ldots \ldots (1)$$

When antennas are scheduled using the IST scheme, capacity of each transmission antenna should be maximized. That is, when antennas are scheduled using the IST scheme, system capacity is equal to the sum of capacities of the respective transmission antennas, as can be expressed in Equation (2).

$$C_{\mathrm{I}}(t) = \sum_{m} \max_{k} c_f(\gamma_{k,m}(t)) \qquad \ldots \ldots \ldots (2)$$

After calculating $C_{\mathrm{M}}(t)$ and $C_{\mathrm{I}}(t)$, in step S10, the base station selects a larger value out of the $C_{\mathrm{M}}(t)$ value and the $C_{\mathrm{I}}(t)$ value, allocates antennas to the user equipment using a scheme corresponding to the selected value, and transmits data to the user equipment, as can be expressed in Equation (3).

$$C_{\mathrm{H}}(t) = \max\{C_{\mathrm{M}}(t), C_{\mathrm{I}}(t)\} \qquad \ldots \ldots \ldots (3)$$

All of the foregoing processes are periodically performed between the base station and the user equipment. Therefore, the base station can actively cope with a change in the number of user equipments connected to the base station.

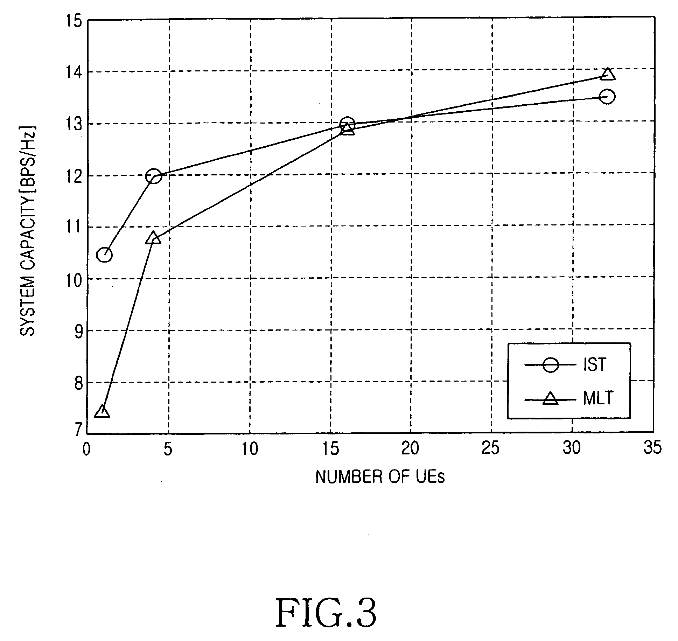

FIG. 3 is a graph illustrating a relationship between system capacities and antenna scheduling schemes. As illustrated, the system capacity increases with the number of user equipments, regardless of the type of the scheduling scheme. However, if the number of user equipments exceeds a predetermined value, the MLT scheme is superior to the IST scheme in terms of system capacity.

In summary, in the present invention, the base station periodically monitors system capacity and adaptively selects the best antenna scheduling scheme according to a change in number of user equipments.

As described above, the present invention compares a system capacity between a system implemented with a linear MMSE reception scheme and an IST antennal scheduling scheme, and a system implemented with a nonlinear SIC reception scheme and an MLT antenna scheduling scheme, and selects an antenna scheduling scheme having higher system capacity according to the comparison result, thereby providing a multiuser MIMO system which can implement the best system capacity in real time according to the number of user equipments connected to a base station.

While the present invention has been shown and described with reference to certain preferred embodiments thereof, it will be understood by those skilled in the art that various changes in form and details may be made therein without departing from the scope of the present invention as defined by the appended claims.

**Claims**

1. An apparatus for transmitting and receiving data in a multiuser Multiple-Input Multiple-Output, MIMO, system, the apparatus comprising:

   a plurality of user equipments ($UE_1$, ...,$UE_k$) for separately calculating channel capacity information using a linear reception scheme and a nonlinear reception scheme, and feeding back the channel capacity information; and
   a base station (10) for receiving the channel capacity information fed back from the user equipments ($UE_1$, ..., $UE_k$), separately calculating system capacities using at least two different antenna scheduling schemes based on the channel capacity information, selecting an antenna scheduling scheme having a higher system capacity from among the at least two antenna scheduling schemes, and allocating transmission antennas to the user equipments using the selected antenna scheduling scheme.

2. The apparatus of claim 1, wherein the at least two different antenna scheduling schemes comprises a Max Link Technique, MLT, scheme for allocating all transmission antennas of the base station (10) to one of the user equipments ($UE_1$, ..., $UE_k$), and an Independent Stream Technique, IST, scheme for allocating the transmission antennas of the base station (10) to different user equipments.

3. The apparatus of claim 2, wherein each of the user equipments ($UE_1$, ..., $UE_k$) receives data using the nonlinear reception scheme when the corresponding user equipment is connected to the base station using the MLT scheme, and receives data using the linear reception scheme when the corresponding user equipment is connected to the base station using the IST scheme.

4. The apparatus of claim 3, wherein the nonlinear reception scheme is a Successive Interference Cancellation, SIC, reception scheme.

5. The apparatus of claim 3 or 4, wherein the linear reception scheme is a Minimum Mean-Squared Error, MMSE, scheme.

6. The apparatus of one of claims 1 to 5, wherein the base station periodically receives the channel capacity information from the user equipments and reselects one of the two antenna scheduling schemes according to the periodically received channel capacity information.

7. A method for transmitting and receiving data in a multiuser Multiple-Input Multiple-Output, MIMO, system in which a base station (10) allocates antennas based on channel state information received from terminals ($UE_1$, ..., $UE_k$) located within a coverage area of the base station (10), the method comprising the steps of:

   receiving, from the terminals, channel capacity information separately calculated by the terminals using at least one linear reception scheme;
   separately calculating (S4) system capacities using at least two different antenna scheduling schemes based on the channel capacity information received (S6) from all of the terminals ($UE_1$, ..., $UE_k$);
   selecting (S8) a antenna scheduling scheme having a higher system capacity from among the at least two antenna scheduling schemes; and
   allocating transmission antennas using the selected antenna scheduling scheme.

8. The method of claim 7, wherein the at least one reception scheme includes a linear reception scheme and a nonlinear reception scheme.

9. The method of claim 8, wherein when the selected antenna scheduling scheme is corresponding to the linear reception scheme, the base station (10) allocates the transmission antennas using an individual antenna allocation scheme.

10. The method of claim 8, wherein when the selected antenna scheduling scheme is corresponding to the nonlinear reception scheme, the base station (10) allocates the transmission antennas using a collective antenna allocation scheme.

11. The method of claim 8, wherein when the selected antenna scheduling scheme is corresponding to the linear reception scheme, the base station (10) allocates the transmission antennas using an individual antenna allocation scheme, and when the selected reception scheme is corresponding to the nonlinear reception scheme, the base station (10) allocates the transmission antennas using a collective antenna allocation scheme.

12. The method of claim 11, wherein the individual antenna allocation scheme allocates transmission antennas on a distributed basis such that system capacity for each terminal is maximized.

13. The method of claim 11, wherein the collective antenna allocation scheme allocates all of the transmission antennas to one terminal.

14. The method of claim 11, wherein the individual antenna allocation scheme is an Independent Stream Technique, IST, scheme and the collective antenna allocation scheme is a Max Link Technique, MLT, scheme.

15. The method of one of claims 8 to 14, wherein the linear reception scheme is a Minimum Mean-Squared Error, MMSE, scheme.

16. The method of one of claims 8 to 14, wherein the nonlinear reception scheme is a Successive Interference Cancellation, SIC, scheme.

17. The method of claim 7, wherein the selected antenna scheduling scheme is corresponding to one of an MLT scheme and an IST scheme.


**Patentansprüche**

1. Anordnung zum Senden und Empfangen von Daten in einem Mehrfacheingabe-Mehrfachausgabe-System (MIMO) für Mehrbenutzer, wobei die Anordnung umfasst:

   eine Vielzahl von Benutzergeräten ($UE_1$, ... $UE_k$) zur getrennten Berechnung von Kanalkapazitätsinformationen unter Verwendung eines linearen Empfangsschemas und eines nichtlinearen Empfangsschemas, und Rückführung der Kanalkapazitätsinformationen; und
   eine Basisstation (10) zum Empfangen der von den Benutzergeräten ($UE_1$, ... $UE_k$) rückgeführten Kanalkapazitätsinformationen, getrennten Berechnen von Systemkapazitäten unter Verwendung von mindestens zwei, auf den Kanalkapazitätsinformationen basierenden, unterschiedlichen zeitlichen Antennensteuerungsschemen, Auswählen eines zeitlichen Antennensteuerungsschemas mit einer höheren Systemkapazität aus den mindestens zwei zeitlichen Antennensteuerungsschemen, und Zuordnen von Sendeantennen den Benutzergeräten unter Verwendung des ausgewählten zeitlichen Antennensteuerungsschemas.

2. Anordnung nach Anspruch 1, wobei die mindestens zwei unterschiedlichen zeitlichen Antennensteuerungsschemen ein Max-Link-Technique-Schema, MLT, zum Zuordnen aller Sendeantennen der Basisstation (10) einem der Benutzergeräte ($UE_1$, ... $UE_k$) und ein Independent-Stream-Technique-Schema, IST, zum Zuordnen der Sendeantennen der Basisstation (10) unterschiedlichen Benutzergeräten umfasst.

3. Anordnung nach Anspruch 2, wobei jedes der Benutzergeräte ($UE_1$, ... $UE_k$) Daten mittels des nichtlinearen Empfangsschemas empfängt, wenn das entsprechende Benutzergerät mit der Basisstation unter Verwendung des MLT-Schemas verbunden ist, und Daten mittels des linearen Empfangsschemas empfängt, wenn das entsprechende Benutzergerät mit der Basisstation unter Verwendung des IST-Schemas verbunden ist.

4. Anordnung nach Anspruch 3, wobei das nichtlineare Empfangsschema ein Successive-Interference-Cancellation-Empfangsschema, SIC, Ist.

5. Anordnung nach Anspruch 3 oder 4, wobei das lineare Empfangsschema ein Minimum-Mean-Squared-Error-Schema, MMSE, ist.

6. Anordnung nach einem der Ansprüche 1 bis 5, wobei die Basisstation periodisch die Kanalkapazitätsinformationen von den Benutzergeräten empfängt und eines der zwei zeitlichen Antennensteuerungsschemen entsprechend den periodisch empfangenen Kanalkapazitätsinformationen neu auswählt.

7. Verfahren zum Senden und Empfangen von Daten in einem Mehrfacheingabe-Mehrfachausgabe-System (MIMO) für Mehrbenutzer, bei dem eine Basisstation (10) Antennen auf der Basis von empfangenen Kanalzustandsinformationen, die von Endgeräten ($UE_1$, ... $UE_k$) empfangen werden, die sich in einem Verkehrsbereich der Basisstation (10) befinden, zuordnet, wobei das Verfahren die Schritte umfasst:

Empfangen, von den Endgeräten, von Kanalkapazitätsinformationen, die durch die Endgeräte unter Verwendung von mindestens einem linearen Empfangsschema getrennt berechnet werden,
getrenntes Berechnen (S4) von Systemkapazitäten unter Verwendung von mindestens zwei unterschiedlichen zeitlichen Antennensteuerungsschemen, basierend auf den von allen der Endgeräte ($UE_1$, ... $UE_k$) empfangenen (S6) Kanalkapazitätsinformationen;
Auswählen (S8) eines zeitlichen Antennensteuerungsschemas mit einer höheren Systemkapazität aus den mindestens zwei zeitlichen Antennensteuerungsschemen; und
Zuordnen von Sendeantennen unter Verwendung des ausgewählten zeitlichen Antennensteuerungsschemas.

8. Verfahren nach Anspruch 7, wobei das mindestens eine Empfangsschema ein lineares Empfangsschema und ein nichtlineares Empfangsschema einschließt.

9. Verfahren nach Anspruch 8, wobei die Basisstation (10) die Sendeantennen unter Verwendung eines einzelnen Antennenzuweisungsschemas zuordnet, wenn das ausgewählte zeitliche Antennensteuerungsschema dem linearen Empfangsprogramm entspricht.

10. Verfahren nach Anspruch 8, wobei die Basisstation (10) die Sendeantennen unter Verwendung eines Gemeinschaftsantennenzuweisungssystems zuordnet, wenn das ausgewählte zeitliche Antennensteuerungsschema dem nichtlinearen Empfangsschema entspricht.

11. Verfahren nach Anspruch 8, wobei die Basisstation (10) die Sendeantennen unter Verwendung eines Einzelnantennenzuweisungsschemas zuordnet, wenn das ausgewählte zeitliche Antennensteuerungsschema dem linearen Empfangsschema entspricht, und die Basisstation (10) die Sendeantennen unter Verwendung eines Gemeinschaftsantennenzuweisungsschemas zuordnet, wenn das ausgewählte Empfangsschema dem nichtlinearen Empfangsschema entspricht.

12. Verfahren nach Anspruch 11, wobei das Einzelantennenzuweisungsschema Sendeantennen auf einer verteilten Basis zuordnet, so dass Systemkapazität für jedes Endgerät maximiert ist.

13. Verfahren nach Anspruch 11, wobei das Gemeinschaftsantennenzuweisungsschema alle der Sendeantennen einem Endgerät zuordnet.

14. Verfahren nach Anspruch 11, wobei das Einzelantennenzuweisungsschema ein Independent-Stream-Technique-Schema, IST, ist und das Gemeinschaftsantennenzuweisungsschema ein Max-Link-Technique-Schema, MLT, ist.

15. Verfahren nach einem der Ansprüche 8 bis 14, wobei das lineare Empfangsschema ein Minimum-Mean-Squared-Error-Schema, MMSE, ist.

16. Verfahren nach einem der Ansprüche 8 bis 14, wobei das nichtlineare Empfangsschema ein Successive-Interference-Cancellation-Schema, SIC, ist.

17. Verfahren nach Anspruch 7, wobei das ausgewählte zeitliche Antennensteuerungsschema einem MLT-Schema und/oder einem IST-Schema entspricht.

**Revendications**

1. Appareil permettant d'émettre et recevoir des données dans un système multi utilisateur à entrées et sorties multiples, MIMO, l'appareil comprenant :

   une pluralité d'équipements utilisateur ($UE_1$, ..., $UE_k$) permettant de calculer séparément des informations sur la capacité de canal en utilisant un principe de réception linéaire et un principe de réception non linéaire, et permettant de renvoyer les informations sur la capacité de canal, et
   une station de base (10) permettant de recevoir des informations sur la capacité de canal renvoyées depuis les équipements utilisateur ($UE_1$, ..., $UE_k$), permettant de calculer séparément les capacités du système en utilisant au moins deux principes différents de programmation d'antennes sur la base des informations sur la capacité de canal, permettant de sélectionner le principe de programmation d'antennes présentant une capacité de système supérieure parmi les au moins deux principes de programmation d'antennes, et permettant d'allouer des antennes d'émission aux équipements utilisateur en utilisant le principe de programmation d'antennes sélectionné.

2. Appareil selon la revendication 1, dans lequel le les deux principes de programmation d'antennes différents ou plus comprennent un principe de technique de liaison maximale, MLT, permettant d'allouer toutes les antennes d'émission de la station de base (10) à l'un des équipements utilisateur ($UE_1$, ..., $UE_k$), et un principe de technique de flux indépendants, IST, permettant d'allouer des antennes d'émission de la station de base (10) à différents équipements utilisateur.

3. Appareil selon la revendication 2, dans lequel chacun des équipements utilisateur ($UE_1$, ..., $UE_k$) reçoit des données en utilisant le principe de réception non linéaire lorsque l'équipement utilisateur correspondant est connecté à la station de base en utilisant le principe MLT, et il reçoit des données en utilisant le principe de réception linéaire lorsque l'équipement utilisateur correspondant est connecté à la station de base en utilisant le principe IST.

4. Appareil selon la revendication 3, dans lequel le principe de réception non linéaire est un principe de réception par annulation d'interférences successives, SIC.

5. Appareil selon la revendication 3 ou la revendication 4, dans lequel le principe de réception linéaire est un principe par erreur quadratique moyenne minimale, MMSE.

6. Appareil selon l'une des revendications 1 à 5, dans lequel la station de base reçoit périodiquement les informations sur la capacité de canal en provenance des équipements utilisateur, et elle sélectionne à nouveau l'un des deux principes de programmation d'antennes en fonction des informations sur la capacité de canal reçues périodiquement.

7. Procédé d'émission et de réception de données dans un système multi utilisateur à entrées et sorties multiples, MIMO, dans lequel une station de base (10) alloue des antennes sur la base d'informations sur un état de canal reçues et provenant de terminaux ($UE_1$, ..., $UE_k$) situés dans la zone de couverture de la station de base (10), le procédé comprenant les étapes suivantes :

   la réception, en provenance des terminaux, d'informations sur la capacité de canal calculées séparément par les terminaux en utilisant au moins un principe de réception linéaire,
   le calcul séparé (S4) des capacités du système en utilisant au moins deux principes de programmation d'antennes différents fondés sur les informations sur la capacité de canal reçues (S6) en provenance de tous les terminaux ($UE_1$, ..., $UE_k$),
   la sélection (S8) d'un principe de programmation d'antennes présentant une capacité système supérieure parmi les deux principes de programmation d'antennes ou plus, et
   l'allocation d'antennes d'émission en utilisant le principe de programmation d'antennes sélectionné.

8. Procédé selon la revendication 7, dans lequel le ou les principes de réception incluent un principe de réception linéaire et un principe de réception non linéaire.

9. Procédé selon la revendication 8, dans lequel, lorsque le principe de programmation d'antennes sélectionné correspond au principe de réception linéaire, la station de base (10) alloue les antennes d'émission en utilisant un principe d'allocation d'antenne individuelle.

**10.** Procédé selon la revendication 8, dans lequel, lorsque le principe de programmation d'antennes sélectionné correspond au principe de réception non linéaire, la station de base (10) alloue les antennes d'émission en utilisant un principe d'allocation d'antenne collective.

**11.** Procédé selon la revendication 8, dans lequel, lorsque le principe de programmation d'antennes sélectionné correspond au principe de réception linéaire, la station de base (10) alloue les antennes d'émission en utilisant un principe d'allocation d'antenne individuelle, et lorsque le principe de réception sélectionné correspond au principe de réception non linéaire, la station de base (10) alloue les antennes d'émission en utilisant un principe d'allocation d'antenne collective.

**12.** Procédé selon la revendication 11, dans lequel le principe d'allocation d'antenne individuelle alloue les antennes d'émission sur une base de répartition de telle sorte que la capacité du système pour chaque terminal soit maximisée.

**13.** Procédé selon la revendication 11, dans lequel le principe d'allocation d'antenne collective alloue la totalité des antennes d'émission à un seul terminal.

**14.** Procédé selon la revendication 11, dans lequel le principe d'allocation d'antenne individuelle est un principe de technique de flux indépendants, IST, et le principe d'allocation d'antenne collective est un principe de technique de liaison maximale, MLT.

**15.** Procédé selon l'une des revendications 8 à 14, dans lequel le principe de réception linéaire est un principe d'erreur quadratique moyenne minimale, MMSE.

**16.** Procédé selon l'une des revendications 8 à 14, dans lequel le principe de réception non linéaire est un principe d'annulation d'interférences successives, SIC.

**17.** Procédé selon la revendication 7, dans lequel le principe de programmation d'antennes sélectionné correspond à l'un d'un principe MLT et d'un principe IST.

FIG.1

UE

BASE STATION

TRANSMIT CONTROL SIGNAL (S2)

CALCULATE CHANNEL CAPACITY WITH SIC AND MMSE (S4)

FEEDBACK CALCULATED CHANNEL CAPACITY INFO (S6)

SELECT ANTENNA SCHEDULING SCHEME (S8)

TRANSMIT DATA WITH SELECTED ANTENNA SCHEDULING SCHEME (S10)

FIG.2

11

FIG.3

**EP 1 564 906 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02093784 A1
- WO 03041300 A1
- US 20030128658 A1